(19)

Europäisches
Patentamt
European
Patent Office
Office européen
des brevets

(11) **EP 4 748 615 A1**

(12) **EUROPEAN PATENT APPLICATION**

(43) Date of publication:
   **27.05.2026 Bulletin 2026/22**

(21) Application number: **24215030.8**

(22) Date of filing: **25.11.2024**

(51) International Patent Classification (IPC):
   ***B60L 1/00*** (2006.01)    ***B60L 53/63*** (2019.01)
   ***B60L 58/12*** (2019.01)    ***B60L 58/26*** (2019.01)
   ***B60L 58/27*** (2019.01)

(52) Cooperative Patent Classification (CPC):
   **B60L 58/12; B60L 1/00; B60L 53/63; B60L 58/26;**
   **B60L 58/27;** B60L 2240/545; B60L 2240/662;
   B60L 2240/80

(84) Designated Contracting States:
   **AL AT BE BG CH CY CZ DE DK EE ES FI FR GB**
   **GR HR HU IE IS IT LI LT LU LV MC ME MK MT NL**
   **NO PL PT RO RS SE SI SK SM TR**
   Designated Extension States:
   **BA**
   Designated Validation States:
   **GE KH MA MD TN**

(71) Applicant: **Hitachi Energy Ltd**
   **8050 Zürich (CH)**

(72) Inventors:
   • **GIUNTOLI, Marco**
    **64521 Groß-Gerau (DE)**
   • **SANTARELLI, Marina**
    **16154 Genova (IT)**

(74) Representative: **Vossius & Partner**
   **Patentanwälte Rechtsanwälte mbB**
   **Siebertstrasse 3**
   **81675 München (DE)**

(54) **CHARGING MANAGEMENT DEVICE, METHOD AND SYSTEM**

(57)   The present disclosure relates to a charging management device for electric vehicles comprising at least one processor configured to obtain a predetermined state of charge, SoC, of a battery of the electric vehicle; determine a power consumption for reaching the predetermined SoC; determine a power consumption for preconditioning of the electric vehicle; and assign a power reserve of at least one electric charger to the electric vehicle based on the determined total power consumption. The disclosure further relates to a corresponding method, system, storage device and computer program.

```
┌─────────────────────────────────────────────┐
│ S1 obtaining a predetermined state of charge, │
│      SoC, of a battery of an electric vehicle │
└─────────────────────────────────────────────┘
                      │
                      ▼
┌─────────────────────────────────────────────┐
│ S2 determining a power consumption for        │
│      reaching the predetermined SoC           │
└─────────────────────────────────────────────┘
                      │
                      ▼
┌─────────────────────────────────────────────┐
│ S3 determining a power consumption for        │
│      preconditioning of the electric vehicle  │
└─────────────────────────────────────────────┘
                      │
                      ▼
┌─────────────────────────────────────────────┐
│ S4 assigning a power reserve of the at least  │
│   one electric charger to the electric vehicle│
│   based on the determined total power         │
│   consumption                                 │
└─────────────────────────────────────────────┘
```

**FIG. 2**

**EP 4 748 615 A1**

**Description**

The present disclosure relates to a charging management device, method and system. The disclosure further relates to a corresponding storage medium and computer program product.

The replacement of fossil-based generators with greener energy sources and the electrification of power trains with the large-scale deployment of hybrid or pure electric vehicles (EV) play an important role in the current energetic transition. This decarbonisation process fosters changes in many sectors, imposing new business models and technical challenges. In this regard, private and public transportation fleets will be forced to a new daily management philosophy, where technical limitations due to charging and preconditioning stops will constrain the vehicles' schedules.

To minimise the risk of services not being supplied (e.g., vehicle not ready for departure due to low charging level), applications based on Energy Management System (EMS) will be crucial. They enable the EV fleet operators to schedule the depot operation, minimising the daily costs (like energy and peak power costs) while considering vehicle logistic and technical constraints (e.g., arrival and departure time and returned charge level). For EV applications, EMS optimally assigns high voltage (HV) battery charging patterns considering boundary conditions like depot and vehicle capabilities, grid firm capacity, and HV battery properties as energy efficiency. It also manages the preconditioning activation, i.e., the cooling down or warming up process of vehicles' cabins and HV battery to reach the optimal operating temperature.

However, depending on various factors during the charging and preconditioning process, the electric charger may not be able to provide sufficient power for reaching the desired state of charge (SoC) or preconditioning in the given time before departure.

The present disclosure has been made in view of and mitigates the above problems.

The invention is specified by the independent claims. Preferred embodiments are defined in the dependent claims. In the following description, although numerous features may be designated as optional, it is nevertheless acknowledged that all features comprised in the independent claims are not to be read as optional.

The present disclosure relates to a charging management device for electric vehicles comprising at least one processor configured to obtain a predetermined state of charge, SoC, of a battery of the electric vehicle; determine a power consumption for reaching the predetermined SoC; determine a power consumption for preconditioning of the electric vehicle; and assign a power reserve of at least one electric charger to the electric vehicle based on the determined total power consumption.

Various embodiments may preferably implement the following features.

Preferably, the electric vehicle and the device are connected or connectable to the at least one electric charger.

Preferably, the power reserve is a predicted additional amount of power to be provided by the charger.

Preferably, the processor is further configured to obtain a target time for reaching the SoC, and to further determine the power consumptions based on the target time.

Preferably, the processor is further configured to obtain an ambient temperature, and to further determine the power consumption for battery cooling and the power consumption for preconditioning based on the obtained ambient temperature.

Preferably, the device comprises at least one temperature sensor for obtaining the ambient temperature.

Preferably, the preconditioning comprises cooling and/or heating the battery and/or the interior of the electric vehicle, and/or multimedia playback, and/or interior lighting.

Preferably, the processor is further configured to obtain at least one of the following historical data: SoC, state of health, SoH, of the battery, preconditioning power consumption, cooling power consumption per vehicle or per kind of vehicle.

Preferably, the total determined power consumption is determined based on the historical data.

Preferably, the historical data is obtained according to the season.

Preferably, the historical data is obtained from a memory and/or a database.

Preferably, the processor is further configured to assign a charger of the at least one electric charger to the electric vehicle according to the determined total power consumption.

Preferably, the processor is configured to assign a sequence of chargers of the at least one electric charger to the electric vehicle according to the determined total power consumption.

Preferably, the charging management device further comprises at least one acquisition circuit configured to acquire a current SoC, and/or a current charging power, and/or a maximum available charging power of each of the at least one charger, and/or a vehicle preconditioning state.

Preferably, the processor is configured to determine the determined total power consumption based on the data acquired by the acquisition circuit.

The present disclosure further relates to a charging management method for electric vehicles comprising obtaining a predetermined state of charge, SoC, of a battery of an electric vehicle; determining a power consumption for reaching the predetermined SoC; determining a power consumption for preconditioning of the electric vehicle; and assigning a power reserve of at least one electric charger to the electric vehicle based on the determined total power consumption.

Various embodiments may preferably implement the following features.

Preferably, the power reserve is a predicted additional amount of power to be provided by the charger.

Preferably, the method further comprises obtaining a target time for reaching the SoC, and further determining the power consumptions based on the target time.

Preferably, the method further comprises obtaining an ambient temperature, and further determining the power consumption for battery cooling and the power consumption for preconditioning based on the obtained ambient temperature.

Preferably, the preconditioning comprises cooling and/or heating the battery and/or the interior of the electric vehicle, and/or multimedia playback, and/or interior lighting.

Preferably, the method further comprises obtaining at least one of the following historical data: SoC, state of health, SoH, of the battery, preconditioning power consumption, cooling power consumption per vehicle or per kind of vehicle.

Preferably, the total determined power consumption is determined based on the historical data.

Preferably, the historical data is obtained according to the season.

Preferably, the historical data is obtained from a memory and/or a database.

Preferably, the method further comprises assigning a charger of the at least one electric charger to the electric vehicle according to the determined total power consumption.

Preferably, the method further comprises assigning a sequence of chargers of the at least one electric chargers to the electric vehicle according to the determined total power consumption.

Preferably, the method further comprises determining the determined total power consumption based on at least one of a current SoC, and/or a current charging power, and/or a maximum available charging power of each of the at least one charger, and/or a vehicle preconditioning state.

The present disclosure also relates to a non-volatile storage medium comprising instructions which, when executed by a processor, configure the processor to perform the method as described above.

Further, the disclosure encompasses a corresponding computer program product comprising instructions which, when executed by a processor, configure the processor to perform the method as described above.

The disclosure also relates to a charging management system for electric vehicles comprising at least one electric charger for electric vehicles and the device as outlined above.

Other aspects, features, and advantages will be apparent from the summary above, as well as from the description that follows, including the figures and the claims.

Embodiments of the present disclosure will now be described by way of example only and with reference to the following accompanying drawings. In the figures, the same reference numerals denote the same or similar elements.

FIG. 1 shows a schematic depiction of a device according to an embodiment of the present disclosure.

FIG. 2 shows a flow chart according to an embodiment of the present disclosure.

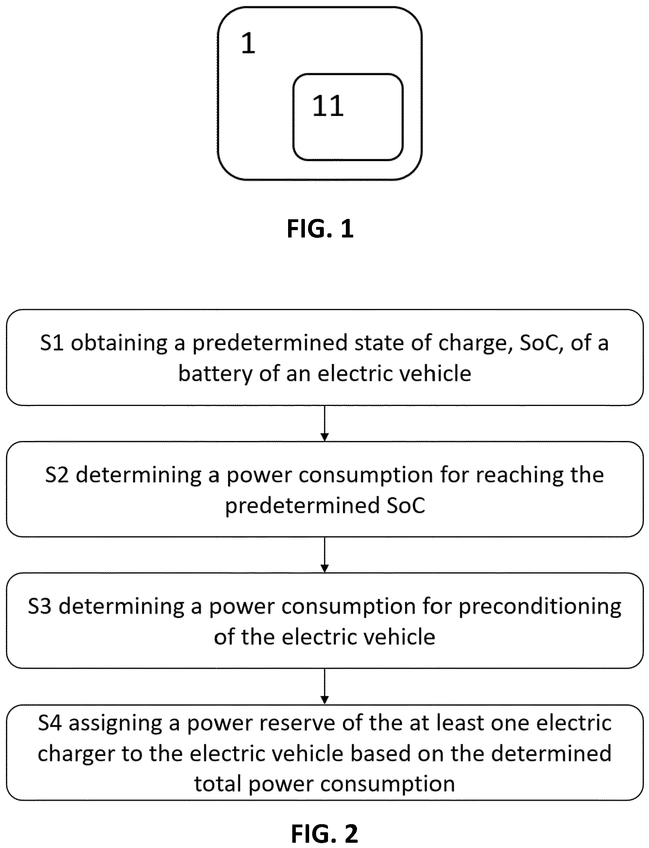

The present disclosure, as schematically shown in FIG. 1, relates to a charging management device 1 for electric vehicles and/or for at least one electric charger comprising at least one processor 11 configured to obtain a predetermined state of charge, SoC, of a battery of the electric vehicle. Moreover, the processor 11 is configured to determine a power consumption for reaching the predetermined SoC and determine a power consumption for preconditioning of the electric vehicle. Based on the determined total power consumption, a power reserve of at least one electric charger is assigned to the electric vehicle.

As used herein, the term SoC relates to the energy remaining in the battery pack. The SoC may be determined using a chemical method, voltage-based method, current integration, Kalman filtering, pressure or a combination thereof. As regards further details of the determination of the SoC, reference is made to respective publications.

The determination of the power consumption may for example be an estimation, approximation, calculation, or taken from previous charging/preconditioning cycles.

The electric vehicle may be connected to or connectable to the electric charger. Moreover, the device 1 may be connected to or connectable to the electric charger. The connection of the device 1 to the electric charger may be wired or wireless. The device 1 may also be integrated to or form part of the electric charger.

As used herein, the power reserve may be a predicted additional amount of power to be provided by the charger. That is, the power reserve may be at least the estimated or determined power amount for reaching the SoC plus the estimated or determined additional power amount for preconditioning. In other words, the power reserve is an additional power band added on top of the determined total power consumption. That is, the power reserve is power that is allocated but potentially not used added on top of the power for charging and preconditioning. Based on the number of electric chargers and the determined power consumption, i.e., charging amount plus reserve, it can be estimated how many vehicles may be simultaneously charged and when they are to be expected to be ready for dispatch.

The processor 11 may further be configured to obtain a target time for reaching the SoC, and to further determine the power consumptions, and thus the power reserve, based on the target time.

The power consumption for battery cooling and the power consumption for preconditioning may be based on an ambient temperature and/or seasonal information. The device 1 may obtain a current ambient temperature, e.g., by a temperature sensor provided inside or outside the device 1, or from a meteorological service.

Preconditioning may comprise, e.g., cooling and/or heating the battery and/or the interior of the electric vehicle, and/or multimedia playback, and/or interior lighting.

For determination of the (estimated) power consumption, the processor 11 may further be configured to obtain at least one of the following historical data: SoC, state of health (SoH) of the battery, preconditioning power consumption, cooling power consumption per vehicle or per kind of vehicle.

SoH generally refers to the condition of the battery compared to its ideal or initial condition. Normally, SoH is indicated in percent, with 100% being an ideal battery condition. For SoH determination, any of the following parameters (alone or in combination) may be considered to derive an SoH value: Internal resistance / impedance / conductance, capacity, voltage, self-discharge, ability to accept a charge, number of charge-discharge cycles, age of the battery, temperature of battery during its previous uses, total energy charged and discharged.

The total determined power consumption may be determined based on the historical data.

The historical data may also be obtained according to the season. Further, the historical data may be obtained from a memory and/or a database.

The processor 11 may further be configured to assign a charger of the at least one electric charger to the electric vehicle according to the determined total power consumption. Alternatively, the processor 11 may be configured to assign a sequence of chargers of the at least one electric charger to the electric vehicle according to the determined total power consumption.

The power consumption may be determined in real time or may be estimated. Real-time estimation may be performed based on, e.g., sensor data, battery data, ambient data or the like. It may also be based on data acquired from an acquisition circuit as outlined below.

The charging management device 1 may further comprise at least one acquisition circuit configured to acquire a current SoC, and/or a current charging power, and/or a maximum available charging power of each of the at least one charger, and/or a vehicle preconditioning state.

The acquisition circuit(s) may comprise at least one sensor for obtaining at least one of current/voltage/capacity/resistance or other electrical values. Moreover, the acquisition circuit(s) may be configured to communicate with the vehicle, e.g., wireless, wired, via an interface, to acquire vehicle status information. The vehicle status information may comprise one or more of SoC, SoH, temperature, vehicle data. Further, the acquisition circuit(s) may be configured to obtain supply power information from a grid, an electric charger, a battery or the like. The information acquired by the acquisition circuit(s) may comprise, e.g., one or more of information on a maximum charging power/output power of an electric charger, a time schedule of an electric charger/electric vehicle, a maximum charging power of a battery, or the like. The functionality of the acquisition circuit(s) may fully or partially be performed by the at least one processor 11.

The processor 11 may further be configured to determine the determined total power consumption based on the data acquired by the acquisition circuit.

The present disclosure further relates to a respective charging management method for electric vehicles. The method substantially corresponds to and may be executed by the device 1 described above.

Referring to FIG. 2, the method comprises obtaining S1 a predetermined state of charge (SoC) of a battery of an electric vehicle, determining S2 a power consumption for reaching the predetermined SoC, determining S3 a power consumption for preconditioning of the electric vehicle, and assigning S4 a power reserve of at least one electric charger to the electric vehicle based on the determined total power consumption.

In an embodiment, the power reserve is a predicted additional amount of power to be provided by the charger. In an embodiment, the method further comprises obtaining a target time for reaching the SoC, and further determining the power consumptions based on the target time. In an embodiment, the method further comprises obtaining an ambient temperature, and further determining the power consumption for battery cooling and the power consumption for preconditioning based on the obtained ambient temperature. In an embodiment, the preconditioning comprises cooling and/or heating the battery and/or the interior of the electric vehicle, and/or multimedia playback, and/or interior lighting.

In an embodiment, the method further comprises obtaining at least one of the following historical data: SoC, state of health, SoH, of the battery, preconditioning power consumption, cooling power consumption per vehicle or per kind of vehicle. In an embodiment, the total determined power consumption is determined based on the historical data. In an embodiment, the historical data is obtained according to the season. In an embodiment, the historical data is obtained from a memory and/or a database.

In an embodiment, the method further comprises assigning a charger of the at least one electric charger to the electric vehicle according to the determined total power consumption. In an embodiment, the method further comprises assigning a sequence of chargers of the at least one electric chargers to the electric vehicle according to the determined total power consumption.

In an embodiment, the method further comprises determining the determined total power consumption based on at least one of a current SoC, and/or a current charging power, and/or a maximum available charging power of each of the at least one charger, and/or a vehicle preconditioning state.

The present disclosure also relates to a corresponding non-volatile storage medium comprising instructions which, when executed by a processor, configure the processor to perform the method as described above. Further, the disclosure encompasses a corresponding computer program product comprising instructions which, when executed by a processor, configure the processor to perform the method as described above.

The disclosure also relates to a charging management system for electric vehicles comprising at least one electric charger for electric vehicles and the device 1 as outlined above. The system may also comprise at least one acquisition circuit and/or at least one sensor.

According to the disclosure, power profiles may be efficiently defined concerning energy and peak power costs, ensuring the achievement of the target SoC before the vehicle departure time.

The effectiveness of the control may depend on the quality of the available forecast as well as the accuracy of the vehicle energy demand both during driving, charging and preconditioning sessions. Charging energy demand can be calculated by knowing the expected SoC at the vehicle arrival and the desirable SoC at the vehicle departure. Historical data can be used to retrieve such information. Nevertheless, the built-in vehicle management system may, during preconditioning, activate several auxiliary loads that increase power demand.

As soon as the vehicle is plugged into the charging station, an exemplary behaviour in line with the above disclosure may be summarised as follows:

- The vehicle starts the charging process according to the available power at the charge point (electric charger).

- When the HV battery reaches the maximum State of Charge of 100% (or the respective desired SoC), the battery power demand is reduced to a value that is supposed to cover the power necessary to keep alive the communication with the charge point. This power demand is constantly requested by the vehicle until it is unplugged.

- Between the end of the charging process and the beginning of the preconditioning process, if the battery's temperature exceeds the acceptable range, the cooling systems of the HV battery are activated. Similarly, heating of the battery may be necessary, depending on the ambient conditions. The estimated power demand depends on the external temperature conditions, but a reference value can be assumed for each season.

- Before the vehicle disconnection, the vehicle may receive a preconditioning activation signal from the EMS. The preconditioning may be activated at a time such that the preconditioning is completed some minutes before the scheduled vehicle plug-out. The estimated power demand of the vehicle during the preconditioning may be fixed and may depend on the cooling system of the vehicle.

The EMS may be in charge of sending the set point to the charging stations with a predefined granularity. This set point may be used as an upper power limit by the vehicles, which may then decide how much power to use according to the limits defined by the EV battery management system.

If the available power at the charge point (i.e., the upper power limit sent by the EMS) does not satisfy the vehicle energy demand, the electricity may be drawn from the battery.

In other words, in case the power management does not provide sufficient charging power, the vehicle may have to use battery power which adversely affects the desired SoC. This drawback, however, is addressed by the present disclosure. In other words, by providing a sufficient amount of power reserve, it can be ensured that the desired SoC and preconditioning is met prior to departure of the vehicle.

According to an embodiment of the present disclosure compatible with the above, the EV consumption modelling may comprise the following. The example given below relates to management and charging of a plurality of electric vehicles with a plurality of chargers, e.g., in fleet management in a depot. In particular, the unplanned and uncontrollable auxiliary loads activated by the EV battery management system can be modelled using some or all of the following parameters. $P_{v,alive} \in \mathbb{R}^+$ indicating the power consumption of the vehicle in idle state. This may encompass, e.g., power consumed by a monitoring system to keep alive the communication with the chargers when not charging in *kW*, |*V*|×1 where *V* is the vehicles' set $P_{v,cool} \in \mathbb{R}^+$ indicating power consumption of the vehicle when the HV battery cooling system is activated in *kW*, |*V*|×1 where *V* is the set of vehicles. $P_{c,nom} \in \mathbb{R}^+$ being the nominal allowed charger power, i.e., the maximum allowed charging power from the charger perspective in *kW*, |*C*|×1 where *C* is the set of chargers.

$eps \in \mathbb{R}^+$ indicating a sensibility on the achievement of the target SoC after which the cooling system can be activated.

$SoCideal_v \in \mathbb{R}^+$ being the ideal SoC of the $v$ - $th$ vehicle battery to be reached before departure time.

$SoCmax_v \in \mathbb{R}^+$ indicating the maximum SoC of the $v$ - $th$ vehicle battery.

$U_{v,t} \in \{0,1\}$ indicating a forecasted vehicle availability inside the depot. That is, $U_{v,t} = 1$ indicates that the $v$ - $th$ vehicle can be connected and ready to be charged at $t$ - $th$ time. The parameter's set is defined by $|V| \times |T|$, where $V$ is the set of vehicles set and $T$ is the optimisation time set.

$\delta cool_{v,t} \in \{0,1\}$ indicates the time step $t$ - $th$ activation state of the cooling system for the $v$ - $th$ vehicle considering charging patters over the entire time horizon, wherein the set of variables is $|V| \times |T|$.

$\delta chprec_{v,t} \in \{0,1\}$ is the time step $t$ - $th$ activation state of charging and preconditioning system for the $v$ - $th$ vehicle. Considering charging patters over the entire time horizon, the set of variables is $|V| \times |T|$. $Pch_{v,t} \in \mathbb{R}^+$ is the time step $t$ - $th$ average charging power for the $v$ - $th$ vehicle. Considering charging patterns over the entire time horizon, the set of variables is $|V| \times |T|$. $Pprec_{v,t} \in \mathbb{R}^+$ is the time step $t$ - $th$ preconditioning power for the $v$ - $th$ vehicle. The set of variables is $|V| \times |T|$. $P_{v,t} \in \mathbb{R}^+$ is the time step $t$ - $th$ power available for the $v$ - $th$ vehicle to perform either charging, preconditioning or battery cooling. The set of variables is $|V| \times |T|$.

The above parameters may be integrated with a Mixed Integer Linear Programming (MILP) optimisation algorithm according to the constraints given in the expressions (1)-(7).

$$Pch_{v,t} \geq P_{v,alive} \cdot \left(1 - \delta cool_{v,t}\right) \cdot U_{v,t}, \quad \forall v \in V, \forall t \in T \qquad (1)$$

$$SoC_{v,t} - SoCideal_v \leq -eps \cdot \left(1 - \delta cool_{v,t}\right) + SoCmax_v \cdot \delta cool_{v,t}, \quad \forall v \in V, \forall t \in T \qquad (2)$$

$$-SoC_{v,t} + SoCideal_v \leq eps \cdot \delta cool_{v,t} + SoCmax_v \cdot (1 - \delta cool_{v,t}), \quad \forall v \in V, \forall t \in T \qquad (3)$$

$$Pch_{v,t} + Pprec_{v,t} \leq P_{c,nom} \cdot U_{v,t}, \quad \forall v \in V, \forall t \in T \qquad (4)$$

$$Pch_{v,t} \geq P_{v,alive} \cdot U_{v,t}, \quad \forall v \in V, \forall t \in T \qquad (5)$$

$$P_{v,t} = Pch_{v,t} + Pprec_{v,t} + P_{v,cool} \cdot \left(1 - \delta chprec_{v,t}\right) \cdot U_{v,t}, \quad \forall v \in V, \forall t \in T \qquad (6)$$

$$P_{v,t} \geq P_{v,cool} \cdot \delta cool_{v,t} \cdot U_{v,t}, \quad \forall v \in V, \forall t \in T \qquad (7)$$

In this exemplary embodiment, the constraint (1) limits the minimum charging power of the vehicle to be the power needed to keep the communication with the charger alive. This limit is true until the achievement of the target state of charge and let avoid self-consumption of the battery.

The constraints (2) and (3) are introduced to take into account in the activation of HV battery cooling system once the charging process is completed (i.e., the SoC is around the target value).

The equation (4) and (5) define the upper and lower limits for the EV battery charging and preconditioning.

The equation (6) defines the overall power set point to be sent as power limit to the charger. It is the sum of the charging, preconditioning and cooling system power. Cooling energy demand is considered only when neither charging nor preconditioning are in progress as $\delta chprec_{v,t}$ turns to 1 only when charging and preconditioning.

The equation (7) forces the overall EV power set to be greater than the battery cooling power.

The vehicle vs charger routing can be established with an additional set of physical and logical constraints and decision variables. Therein:

$R_{vi,vj} \in \{0,1\}$ indicates a forecasted overlapping vehicle parameter, i.e. $R_{vi,vj} = 1$ means that $i$ - $th$ and $j$ - $th$ vehicles have, at least, one time step where both are available inside the depot. The parameter set is defined by $|V| \times |V|$ where $V$ is the set of vehicles. $P_{v,nom} \in \mathbb{R}^+$ is a nominal allowed vehicle power, i.e., a maximum allowed charging power from the vehicle perspective in $kW$, $|V| \times 1$ where $V$ is the set of vehicles.

$\delta_{v,c} \in \{0,1\}$ describes which vehicle is connected to which charger. If $\delta_{v,c} = 1$ means that vehicle $v$ - $th$ is connected to the charger $c$ - $th$, otherwise 0. Considering all possible combinations, the set of variables is $|V| \times |C|$.

Binary and continuous variables will impose a MILP problem to be solved. Constraints (8)-(10) describe the logical and physical relationship between vehicles and chargers.

$$\sum_{c=1}^{C} \delta_{v,c} \leq 1, \quad \forall v \in V \tag{8}$$

$$\sum_{i=1}^{V} \sum_{j=i+1}^{V} R_{i,j} \cdot \left( \delta_{i,c} + \delta_{j,c} \right) \leq 1, \quad \forall c \in C \tag{9}$$

$$Pch_{v,t} \leq \sum_{c=1}^{C} U_{v,t} \cdot \delta_{v,c} \cdot \min\left( P_{c,nom}, P_{v,nom} \right), \quad \forall v \in V, \forall t \in T \tag{10}$$

Therein, the constraint (8) describes that each vehicle cannot be assigned to more than one charger. Exceptions to this constraint could be applied in the case of a specific hardware setup, e.g., a vehicle that accepts parallel charger configuration. Further hardware limitations could be applied similarly, e.g., a specific vehicle cannot be connected to one specific charger. For all the corner cases, this constraint needs to be augmented with dedicated auxiliary ones.

The inequality constraint (9) excludes combinations where both vehicles are available inside the depot simultaneously. The same considerations could be made in case of exceptions.

The inequality constraint (10) allows the charging power to be different from zero. Minimum power capability between charger and vehicle will be considered.

The inequality constraint (9) allows to disregard non-applicable routing due to simultaneous vehicle availability. In particular, the constraint solves the problem in a compact way, i.e., keeps the problem size (in terms or number of variables) as small as possible. However, this formulation does not allow for modifying charger during the charging phase: the vehicle is assigned to a single charger that cannot be rescheduled to another vehicle for the entire availability time. This assumption leads to solution unfeasibility as soon as the number of simultaneous vehicles exceeds the number of chargers. To overpass this condition, a broad but compact model is shown below with the following variables.

$\beta_{v,c,t} \in \{0,1\}$ describes vehicle is connected to which charger for each time step. If $\beta_{v,c,t} = 1$ means that vehicle $v$-$th$ is plugged to the charger $c$-$th$ at $t$-$th$ time, otherwise 0. Considering all possible combinations, the set of variables is $|V| \times |C| \times |T|$.

$\gamma_{v,t} \in \{0,1\}$ describes the transition between unplugged to plugged to a charger for each time step. If $\gamma_{v,t} = 1$ means that vehicle $v$-$th$ is being connected at $t$-$th$ time. Considering all possible combinations, the set of variables is $|V| \times |T|$.

Binary and continuous variables will impose a MILP problem to be solved. Following the same approach as above, the following set of constraints describes the extended formulation.

$$\sum_{c=1}^{C} \beta_{v,c,t} \leq U_{v,t}, \quad \forall v \in V, \forall t \in T \tag{11}$$

$$\sum_{v=1}^{V} \beta_{v,c,t} \leq 1, \quad \forall c \in C, \forall t \in T \tag{12}$$

$$\gamma_{v,t} \geq \beta_{v,c,t} - \beta_{v,c,t-1}, \quad \forall v \in V, \forall c \in C, \forall t \in T \setminus \{1\} \tag{13}$$

$$\sum_{t=1}^{T} \gamma_{v,t} \leq 1, \quad \forall v \in V \tag{14}$$

$$Pch_{v,t} \le \sum_{c=1}^{C} \beta_{v,c,t} \cdot \min\left(P_{c,nom}, P_{v,nom}\right), \quad \forall v \in V, \forall t \in T \qquad (15)$$

The constraint (11) ensures that the vehicle cannot be plugged if it is not inside the depot. The same consideration can be applied from (8).

Inequality constraint (12) ensures that each charger can supply one single vehicle at time. Proper limits can be considered and amended if the charger can supply more than one vehicle. Inequality constraint (13) forces $\gamma_{v,t}$ to be one when the vehicle is being plugged to the charger in order to be charged.

Inequality constraint (14) sets the maximum number of recharging phases (i.e., from unplugged to plugged) equal to one. Even in this case, corner cases can be managed by relaxing this constraint. However, this constraint is used to avoid a bouncing effect (i.e., multiple unused connection and disconnection).

The constraint (15) allows charging power once the vehicle is plugged in.

The present disclosure thus provides an improved energy management ensuring that a desired SoC and preconditioning is reached prior to departure of each vehicle.

In previous systems, missing real EV energy consumption sources could lead to not meeting the target SoC for the vehicle departure or increase the cycles of the HV battery, producing faster battery degradation. Integration in a depot management system of an accurate energy demand modelling for EVs such that real power consumption due to both HV battery charging and cooling/heating system is considered in scheduling the EV daily operations is key.

With the proposed EV consumption modelling, a reserve for an unpredictable event of energy consumption that cannot be controlled by the EMS, vehicle or a user, and that could lead to battery cycling and a faster degradation can be allocated. The proposed solution is widely applicable as it is not vehicle model dependent.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any one of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any one of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any one of the various illustrative logical blocks, units, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "unit" as used herein, refers to software, firmware, hardware, and any combination of these elements for performing the associated functions described herein. Additionally, for purpose of discussion, the various units are described as discrete units; however, as would be apparent to one of ordinary skill in the art, two or more units may be combined to form a single unit that performs the associated functions according embodiments of the present disclosure.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organisation.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

**Claims**

1. Charging management device (1) for electric vehicles comprising at least one processor (11) configured to:

   obtain a predetermined state of charge, SoC, of a battery of the electric vehicle;
   determine a power consumption for reaching the predetermined SoC;
   determine a power consumption for preconditioning of the electric vehicle; and
   assign a power reserve of at least one electric charger to the electric vehicle based on the determined total power consumption.

2. Charging management device (1) according to claim 1, wherein the power reserve is a predicted additional amount of power to be provided by the charger.

3. Charging management device (1) according to claim 1 or 2, wherein the processor (11) is further configured to obtain a target time for reaching the SoC, and to further determine the power consumptions based on the target time.

4. Charging management device (1) according to any one of claims 1 to 3, wherein the processor (11) is further configured to obtain an ambient temperature, and to further determine the power consumption for battery cooling and the power consumption for preconditioning based on the obtained ambient temperature;
   wherein preferably, the device (1) comprises at least one temperature sensor for obtaining the ambient temperature.

5. Charging management device (1) according to any one of claims 1 to 4, wherein the preconditioning comprises cooling and/or heating the battery and/or the interior of the electric vehicle, and/or multimedia playback, and/or interior lighting.

6. Charging management device (1) according to any one of claims 1 to 5, wherein the processor (11) is further configured to obtain at least one of the following historical data: SoC, state of health, SoH, of the battery, preconditioning power consumption, cooling power consumption per vehicle or per kind of vehicle;

> wherein the total determined power consumption is determined based on the historical data;
> wherein preferably, the historical data is obtained according to the season; and/or
> wherein preferably, the historical data is obtained from a memory and/or a database; and/or
> wherein the processor (11) is further configured to assign a charger of the at least one electric charger to the electric vehicle according to the determined total power consumption, or
> wherein the processor (11) is configured to assign a sequence of chargers of the at least one electric charger to the electric vehicle according to the determined total power consumption.

7. Charging management device (1) according to any one of claims 1 to 6, , further comprising at least one acquisition circuit configured to acquire a current SoC, and/or a current charging power, and/or a maximum available charging power of each of the at least one charger, and/or a vehicle preconditioning state;
wherein the processor (11) is configured to determine the determined total power consumption based on the data acquired by the acquisition circuit.

8. Charging management method for electric vehicles comprising:

> obtaining (S1) a predetermined state of charge, SoC, of a battery of an electric vehicle;
> determining (S2) a power consumption for reaching the predetermined SoC;
> determining a power consumption for preconditioning of the electric vehicle; and
> assigning a power reserve of at least one electric charger to the electric vehicle based on the determined total power consumption.

9. Charging management method according to claim 8, wherein the power reserve is a predicted additional amount of power to be provided by the charger.

10. Charging management method according to claim 8 or 9, further comprising obtaining a target time for reaching the SoC, and further determining the power consumptions based on the target time; and/or
further comprising obtaining an ambient temperature, and further determining the power consumption for battery cooling and the power consumption for preconditioning based on the obtained ambient temperature.

11. Charging management method according to any one of claims 8 to 10, wherein the preconditioning comprises cooling and/or heating the battery and/or the interior of the electric vehicle, and/or multimedia playback, and/or interior lighting.

12. Charging management method according to any one of claims 8 to 11, further comprising obtaining at least one of the following historical data: SoC, state of health, SoH, of the battery, preconditioning power consumption, cooling power consumption per vehicle or per kind of vehicle;

> wherein the total determined power consumption is determined based on the historical data;
> wherein preferably, the historical data is obtained according to the season; and/or
> wherein preferably, the historical data is obtained from a memory and/or a database; and/or
> further comprising assigning a charger of the at least one electric charger to the electric vehicle according to the determined total power consumption, or
> assigning a sequence of chargers of the at least one electric chargers to the electric vehicle according to the determined total power consumption; and/or
> further comprising determining the determined total power consumption based on at least one of a current SoC, and/or a current charging power, and/or a maximum available charging power of each of the at least one charger, and/or a vehicle preconditioning state.

13. Non-volatile storage medium comprising instructions which, when executed by a processor, configure the processor to perform the method according to any one of claims 8 to 12.

14. Computer program product comprising instructions which, when executed by a processor, configure the processor to perform the method according to any one of claims 8 to 12.

15. Charging management system for electric vehicles comprising at least one electric charger for electric vehicles; and the device (1) according to any one of claims 1 to 7.

**1**

**11**

**FIG. 1**

S1 obtaining a predetermined state of charge, SoC, of a
battery of an electric vehicle

S2 determining a power consumption for reaching the
predetermined SoC

S3 determining a power consumption for preconditioning
of the electric vehicle

S4 assigning a power reserve of the at least one electric
charger to the electric vehicle based on the determined
total power consumption

**FIG. 2**

Europäisches
Patentamt

European
Patent Office

Office européen
des brevets

# EUROPEAN SEARCH REPORT

**Application Number**

EP 24 21 5030

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/375537 A1 (ZARRILLI DONATO [DE] ET AL) 14 November 2024 (2024-11-14) * paragraphs [0109], [0119], [0122], [0188], [0195], [0200], [0212]; figure 1 * | 1-15 | INV. B60L1/00 B60L53/63 B60L58/12 B60L58/26 B60L58/27 |
| X | US 2019/217738 A1 (MARCIAL-SIMON ENRIQUE [DE] ET AL) 18 July 2019 (2019-07-18) * paragraphs [0035] - [0038], [0043] - [0048] * | 1-15 | |
| X | EP 4 372 642 A1 (HITACHI ENERGY LTD [CH]) 22 May 2024 (2024-05-22) * paragraphs [0067] - [0101] * | 1-15 | |

**TECHNICAL FIELDS SEARCHED (IPC)**

B60L

The present search report has been drawn up for all claims

| Place of search | Date of completion of the search | Examiner |
|---|---|---|
| The Hague | 10 May 2025 | Bellatalla, Filippo |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 21 5030

This annex lists the patent family members relating to the patent documents cited in the above-mentioned European search report.
The members are as contained in the European Patent Office EDP file on
The European Patent Office is in no way liable for these particulars which are merely given for the purpose of information.

10-05-2025

| Patent document cited in search report | | Publication date | Patent family member(s) | | Publication date |
|---|---|---|---|---|---|
| US 2024375537 | A1 | 14-11-2024 | AU | 2021460192 A1 | 29-02-2024 |
| | | | CA | 3227764 A1 | 16-02-2023 |
| | | | CN | 117794776 A | 29-03-2024 |
| | | | EP | 4384412 A1 | 19-06-2024 |
| | | | JP | 2024530679 A | 23-08-2024 |
| | | | US | 2024375537 A1 | 14-11-2024 |
| | | | WO | 2023016655 A1 | 16-02-2023 |
| US 2019217738 | A1 | 18-07-2019 | CN | 109562699 A | 02-04-2019 |
| | | | DE | 102016219726 A1 | 12-04-2018 |
| | | | EP | 3526072 A1 | 21-08-2019 |
| | | | US | 2019217738 A1 | 18-07-2019 |
| | | | WO | 2018068903 A1 | 19-04-2018 |
| EP 4372642 | A1 | 22-05-2024 | NONE | | |

EPO FORM P0459

For more details about this annex : see Official Journal of the European Patent Office, No. 12/82